(19) Europäisches Patentamt
European Patent Office
Office européen des brevets

(11) EP 1 765 031 A1

(12) EUROPEAN PATENT APPLICATION

(43) Date of publication:
21.03.2007 Bulletin 2007/12

(51) Int Cl.:
*H04Q 7/38* (2006.01)

(21) Application number: 05425643.3

(22) Date of filing: 15.09.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Siemens Mobile Communications S.p.A.
20126 Milano (IT)

(72) Inventors:
• Anisetti, Marco
26010 Pianengo (CR) (IT)

• Ardagna, Claudio Agostino
26013 Crema (IT)
• Bellandi, Valerio
26013 Crema (IT)
• Damiani, Ernesto Prof.
29025 Groppello (PC) (IT)
• Reale, Salvatore
26866 S. Angelo Lodigiano (IT)

(74) Representative: Giustini, Delio
Siemens Information and Communication Networks S.p.A.,
Palazzo Gorky
Via Monfalcone, 1
20092 Cinisello Balsamo (IT)

(54) **Method, system, network and computer program product for positioning in a mobile communications network**

(57) A system for locating mobile terminals in a communication network includes a location module (12) for determining a set of points candidate to representing the position of a mobile terminal being located and a selection module (16) for selecting out of the set of candidate points at least one point representative of the position of the mobile terminal being located. The system also includes an input module (18) for defining geographical and movement (e.g. speed, acceleration, jerk) constraints to be complied with by the mobile terminal being located and a filter (14) for filtering out of the set of candidate points those points in said set that fail to comply with the geographical and movement constraints defined, thus generating a subset of points candidate to representing the position of the mobile terminal being located. The selection module (16) is connected to the filter (14) to perform the step of selecting (16) on the subset of points candidate to representing the position of the mobile terminal being located.

Fig. 3

**Description**

Field of the invention

The invention relates to mobile communication networks and, more specifically, to positioning techniques for use in those networks.

Description of the related art

Increasing usage of mobile phones and the upcoming of a new generation (3G) in mobile telecommunications have led to the development of mobile applications that simplify and improve mobile network management and provide users with new services/applications. In particular, many projects focus on the development of applications currently referred to as Location Based Services (LBS). Most LBS applications rely on a fast and precise determination of the location of the mobile terminal.

Satellite-based positioning is an interesting option for some high-end applications, where high precision location and high performance in general are sought after. For instance, a GPS-based system provides coded satellite signals that can be processed in a GPS receiver, enabling the receiver to compute position, velocity and time. Four GPS satellite signals are used to compute positions in three dimensions and the time offset in the receiver clock. A-GPS is an enhanced version of GPS that differs from standard GPS due to the addition of a further element, the Assistance Server. A conventional GPS network only includes the GPS satellites and GPS receivers. In an A-GPS network, the receiver is limited in processing power and normally under less than ideal circumstances for position fixing. The receiver thus communicates with an assistance server that has high processing power and accesses a reference network. In neither case information is extracted from a map and all the maps are stored in the GPS receiver with a high impact on hardware requirements. In fact, in the GPS case, the maps are entirely stored in the GPS receiver and only a minimum amount of information is extracted from maps (e.g. the GPS always locates a user on a street or road). Maps are used primarily to display the position of the GPS user.

Even leaving aside cost-related limitations (such as e.g. additional hardware requirements) and the inability to operate with low comsumption levels, GPS and A-GPS are not in a position to provide a number of interesting functions for LBS operation such as e.g. mobile tracking certification. More to the point, in order to sensibly cope with budget issues that are particularly significant for many proposed LBS applications, a general purpose, low cost Positioning and Motion Tracking System (PMTS) solution for a mobile network should preferably (i) exploit only information available to the network itself and (ii) avoid the need for additional hardware.

Certain techniques have been proposed for cell phones positioning on the basis of multipath propagation and delay evaluations. Exemplary of these techniques are the following techniques:

-    Cell Identification;
-    Signal Level;
-    Angle of Arrival (AoA);
-    Time of Arrival (ToA); and
-    Time Difference of Arrival (TDoA).

Cell Identification is the simplest approach to the determination of the location and is based on the cell currently serving a given mobile terminal being known a-priori: the coordinates of the base station of that cell can thus be used as a first and rough estimation of the mobile's location. The accuracy of the estimated location is dictated by the radius of the cell. For rural and urban areas this dimension lies between 200 m and 2.5 km. However, due to propagation effects, the cell selected might not be served by the base station that is the closest to the terminal. As a result, the degree of accuracy achievable is not very high: while this may be acceptable for some applications (e.g. city guides with information about hotels or restaurants), this approach is not viable for crucial services such as instance navigation or emergency services.

The Signal Level approach takes into account signal attenuation measurements to determine the location of the mobile terminal. If free space propagation and omni-directional antennas are assumed, the signal level contours around a base station are concentric circles, and three base stations suffice to provide the exact location of a terminal. If directional antennas are used, the principle remains the same, while the circles are replaced by more complex geometrical shapes. However, the assumption of free space propagation does not properly apply in urban areas. Additionally, due to multi-path propagation and shadowing of buildings, even omni-directional antennas have no circular signal level contours.

Angle of Arrival (AOA) measurements at the base station are used to improve accuracy of the simple signal level method. AoA is only possible if more than one antenna is used for signal reception. If one considers a two-dimensional geometry, the angles of arrival at two base stations are sufficient for unique location of the terminal (reducing the three base stations required for the basic signal level method). However, problems thoroughly similar to the problems discussed for the signal level method arise in the case of AoA measurements: if no line-of-sight (LOS) relationship exists between the mobile terminal and the base stations, the angles determined do not correspond with the actual directional vector from the base station to the mobile. Accurate angle measurements should rely on four or more antennas, a non-realistic hardware requirement for today's mobile networks.

Those techniques based on Time of Arrival (ToA) measurements determine the distance between a base station and a mobile terminal by measuring the time taken by a signal to travel from the base station to the terminal, and back from the terminal to the base station. Geometrically, this provides a circle, centred at the base station, on which the terminal must lie. Using at least three base stations to resolve ambiguities in two dimensions, the intersection of the circles provides an indication of the terminal position. This method has the disadvantage that it requires the terminal to act as a transponder: processing delays and non-LOS propagation can introduce errors.

Those techniques based on Time Difference of Arrival (TDoA) assume the existence of synchronized base stations within the network or known delays between them. The measurement of the absolute propagation times can thus be replaced by a determination of the difference between the propagation times. This can occur either by measuring the differences of arrival time of a certain burst sent by the mobile to several base stations or by recording the time differences of impinging signals at the mobile. The latter method is named Enhanced Observed Time Difference (E-OTD). Using this technique, a higher accuracy with respect to the method of absolute time delay can be achieved.

The methods discussed previously are quite efficient and do not require individual tuning for each network and environment. All input values can be obtained from the network and no additional modifications in the pre-existing network's infrastructure are required.

These prior art solutions generally operate well in an extra-urban scenario but tend to perform badly in complex urban situations, such as e.g. very dense urban areas or indoor scenarios exposed to strong multi-path propagation. In these environments, the relationship between path loss (or time delay) and actual distance is not always adapted to be expressed as a proportional relationship according to a logarithmic (or linear) law. Additionally, in urban and indoor environments, multipath propagation leads to quite complex scenarios wherein a Line-Of-Sight (LOS) relationship between the mobile terminals and the base stations is only rarely ensured. In these scenarios, location techniques based on simple delay evaluations and even satellite-based GPS may not be sufficiently accurate and are often unfeasible.

The discussion provided in the foregoing is supported by extensive literature.

A general review of the related topics can be found e.g. in C. Drane: "Positioning GSM telephones". IEEE Communications Magazine, April 1998, Vol. 36, No. 4, pp. 46-59. As discussed above, common location techniques based on serving cells provide only a very rough location estimate in an urban scenario. For more precise positioning, current approaches monitor field power values as received from mobile terminals as well as propagation time between terminals and based stations.

The article by James J. Caffery, Jr. and Gordon L. Stüber: "Overview of Radiolocation in CDMA Cellular Systems". 60th IEEE Communications Magazine, April 1998 recognizes that a major problem of all these methods is that they work better when a LOS (line-of-sight) relationship is guaranteed to exist between terminals and base stations. Especially in urban environments multi-path propagation leads to very complicated scenarios without LOS between the mobile terminals and the base stations. In these kinds of scenarios, a location technique based on simple delay evaluations is not accurate enough or even impossible.

The article of D. Zimmermmann, J. Baumann, M. Layh, F. Landstorfer, R. Hoppe and G. Wöfle: Database Correlation for Positioning of Mobile Terminals in Cellular Networks using Wave Propagation Models. 60th IEEE Vehicular technology conference (VTC) 2004 -Fall, Los Angeles, Oct. 2004 confirms that path-loss and look-up-table techniques do not satisfy strict precision requirements even when urban-oriented propagation estimate method like Walfisch-Ikegami or "intelligent ray-tracing" are applied as discussed e.g. in R. Hoppe, G. Wöfle and F. Landstorfer: Fast 3-D Ray Tracing for the Planning of Microcells by Intelligent Preprocessing of the Data Base. 3rd European Personal and Mobile Communication Conference (EPMCC) 1999, Paris, Mar. 1999.

Object and summary of the invention

The preceding discussion of the related art indicates the need for new techniques that address the issues left unsolved by the prior art arrangements with special emphasis placed on location in urban and/or indoor environment.

The object of the invention is thus to provide a fully satisfactory response to that needs.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion. The claims are an integral part of the disclosure of the invention provided herein.

A preferred embodiment of the arrangement described herein performs location of mobile terminals in a mobile communication network by:

- determining (e.g. according to any known method or technique) a set of points candidate to representing the position of a mobile terminal being located;
- selecting (e.g. via predictive filtering such as Kalman filtering) out of said set of candidate points at least one point representative of the position of a mobile terminal being located,
- defining geographical (e.g. map) and movement (e.g. velocity/speed, acceleration, jerk) constraints to be complied with by said mobile terminal being located; and
- filtering out (e.g. via a rule engine) of said set of points candidate to representing the position of said mobile terminal being located those points in said set that fail to comply with said geographical and movement constraints, thus generating a subset of points candidate to representing the position of said mobile terminal being located; and
- performing said step of selecting on said subset of points candidate to representing the position of said mobile terminal being located.

Specifically, the arrangement described herein allows precise location and tracking of mobile antennas in complex environments/scenarios. The arrangement described herein provides an enhanced solution for urban positioning and motion tracking that takes in account constraints stated in urban maps as well as movement constraints in terms of velocity, acceleration and jerk. As used herein, "jerk" generally denotes the <u>derivative</u> of <u>acceleration</u> with respect to time, namely the third derivative of displacement, that is the rate of change in acceleration. High jerk values mean that the acceleration rate is changing rapidly.

The arrangement described herein solves the problems of scattering, tunnelling, diffraction and reflection as well as the problems concerned with electromagnetic field measurements. The arrangement described herein leads to a precise tracking of mobile terminal position within cells also in urban scenario. This result is achieved by utilizing the information that can be extracted from a Geographic Information System (GIS) map of the interested area preferably in conjunction with prevision filtering to improve precision in location and tracking. The arrangement described herein is also able to provide different level of accuracy depending on information available on the map or on time constraints. This approach is based on accurate propagation models originally designed for mobile radio networks planning. Such models are used to define a look-up-table. By evaluating the measured path losses between the mobile terminal and the base stations and by correlating these losses with the entries of the look-up-table, one can determinate a variable number of position estimates dependent e.g. on sensitivity map analysis as discussed e.g. in P. Wertz, G. Wöfle Hoppe, D. Zimmermmann, and F. Landstorfer: Enhanced Localization Technique within Urban and Indoor Environments based on Accurate and Fast Propagation Models. European Co-operation in the field of scientific and technical research, COST 273, Guildford UK, Jan. 2002. A sensitivity map is produced from map information, base antenna position, number of candidate estimate and represents the error sensitivity of the multiple-candidate correlation method described herein for the location.

The arrangement described herein is thus in a position to improve the correct instant location probability. A candidate-estimate is validated by means of a tracking method that uses a time forwarding algorithm to provide a first-level movement estimate. This movement trend is filtered with a constrained Kalman filter, obtaining a robust error and time-deep prevision tracking. These tracking techniques take advantage of all medium-level map information such as e.g. area classification (pedestrian area, high velocity area), so that the validation of a candidate-estimate depends on map constraints and estimated motion model. In many cases, the additional information provided by the map is scarce or absent; when this occurs, the arrangement described herein is able to dynamically build an information data-based estimating all relevant knowledge including trend speed and acceleration for every map zone. On the basis of this information (either provided by a GIS map or estimated), the arrangement described herein produces a real improvement in terms of location confidence.

The arrangement described herein provides a number of basic advantages, namely:

- high-precision location in terms of improved location of mobile antennas, while ensuring little discrepancy between the real and the estimated position. A set of possible n-points is first calculated and then filtered to calculate a solution subset that contains all those points that satisfy map and movement constraints;
- mobile phone tracking certification: this is a major improvement over conventional location techniques in that it makes it possible to certify the path followed by a mobile (possibly for forensic purposes);
- high performance allowing, i.a. real-time computation;
- no additional hardware is required at the terminals, thus avoiding budget constraints likely to affect the proposed architectures: no hardware needs to be added to the current mobile antennas; and

- low additional costs, since only software updates, and no additional hardware components, are required.

<u>Brief description of the annexed drawings</u>

The invention will now be described, by way of example only, with reference to the enclosed figures of drawing, wherein:

- Figure 1 is a functional block diagram generally representative of the approach underlying the arrangement described herein;
- Figure 2 is representative of an antenna planning step;
- Figure 3 is a functional block diagram showing information flow within the arrangement described herein;
- Figure 4 schematically represents a mobile tracking certification feature of the arrangement described herein;
- Figure 5 schematically represents the map information and movement-based reasoning underlying the arrangement described herein; and
- Figure 6 is a detailed block diagram of a portion of the system described herein.

<u>Detailed description of preferred embodiments of the invention</u>

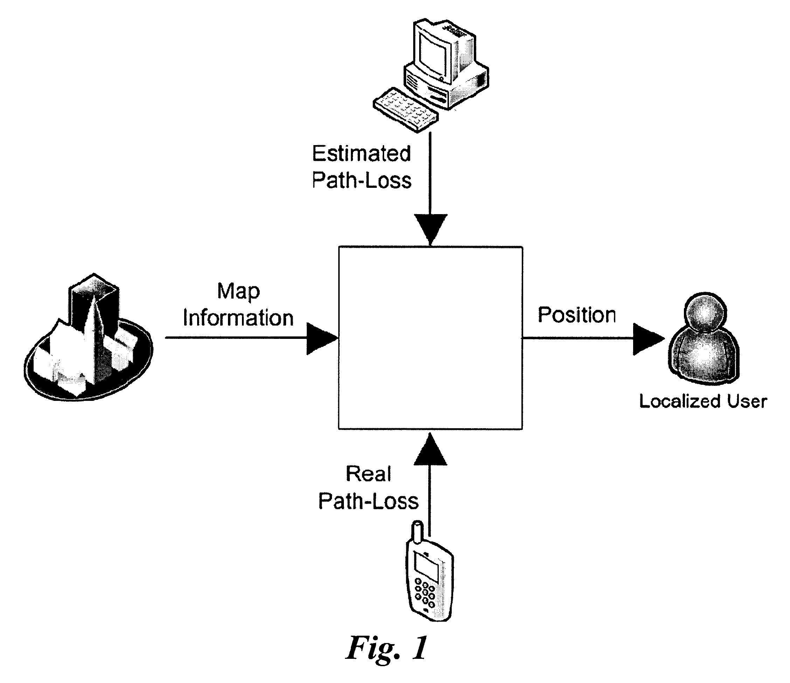

As schematically shown in Figure 1, the system described herein, generally indicated by 10, operates on the basis of three main sources of information, namely i) map information, ii) estimated path loss, and iii) real path loss, to produce position information as to the location of a given user in a mobile communication network (of any known type, not illustrated in detail in the drawing).

The system 10 takes into account real and estimated path-loss information together with the information that can be extracted from a GIS (Geographic Information System) map of the interested area. This is in costrast with those techniques that compute the mobile position only through real and estimated path-loss as is the case of certain prior art approaches discussed in the introductory portion of this description. Additionally map information is overlapped with movement information as for example velocity, acceleration and jerk.

To summarise, the system 10 uses medium-level map information such as for instance area classification (pedestrian area, high velocity area), so that validation of candidate-estimates depends on map and movement constraints. With this information, derived from a GIS map or estimated by the system 10 itself, a real improvement in location confidence is achieved. In addition, the system can exploit map information, for instance to deduce that is impossible for a mobile antenna to move at 70 km/h in a pedestrian area while this is absolutely possible on a highway.

As a whole, the system 10 provides several functionalities that are listed below:

- Electromagnetic Field Computation: the system 10 computes the electromagnetic field for each antenna, allowing the schematization of the electromagnetic coverage in the map of interest;
- Antenna Layout Planning: the system 10 provides a means to place antennas within the map to compute total electromagnetic coverage. This feature allows to better understand the places less covered and so simplify the antennas planning, avoiding position errors;
- Mobile Phone Location: the system 10 provides mobile location as for traditional implementations. Mobile Antennas can be located in any kind of scenario (metropolitan, urban, suburban, rural);
- Mobile Tracking Phone Certification: the system 10 provides an improved version of tracking not only on the basis of a single point time-based location but relying on a set of estimated points for every period and timeforwarding algorithm that provides a first-level movement estimate. The system 10 also provides a tracking certification mechanism;
- Multiplexing: the system 10 is in a position to provide dynamic cell management based on mobile antenna traffic. This feature relies on current cell traffic load to predict future loads.

Unless differently detailed in the following, the system 10 provides each of the functions listed in the foregoing by resorting to structural features that are known per se, thus making it unnecessary to provide a more detailed description herein.

The system 10 can be possibly configured as a network-based application involved in the geo-location of the customer mobile terminals. In particular, the system 10 comprises a tool that allows the definition of the number and positions of the mobile antennas, the calculation of the electromagnetic field produced thereby, the calculation of the sensibility map, the geo-location of a mobile phone and the computation of the path of a mobile phone during a time interval. Possible developments may include computing the best antenna positions to optimize the mobile signal coverage.

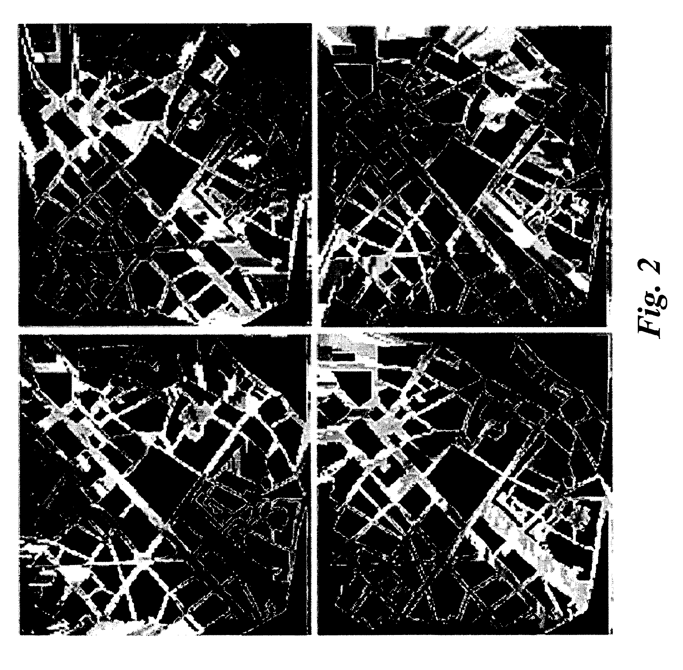

Antenna planning is a first step in developing and deploying a mobile communication network. On the basis of antenna planning information, by taking into account the related map information, a system such as the system 10 is in a position to draw an electromagnetic field map. This typically occurs by resorting to propagation models and gives rise to coverage maps of the types schematically shown in Figure 2 where "light" areas have a good coverage (i.e. field strength) while the "dark" portions of the map have lower/poor coverage.

Specifically, the system 10 is adapted to perform (by known means) an electromagnetic field computation by computing the electromagnetic field for each antenna in the network, allowing the schematization of the electromagnetic coverage in the map of interest. In that way, the system may support antenna layout planning, by supporting "placement" of the antennas within the map to compute total electromagnetic coverage. This feature allows to better identify those areas that are less covered and to simplify antenna planning, thus avoiding errors in antenna positioning.

The system 10 is further configured to proceed to mobile terminal location. In general terms, the system 10 performs basic location of mobile terminals as per traditional implementations e.g. by any known means. Mobile antennas can be located in any scenario (metropolitan, urban, suburban, rural).

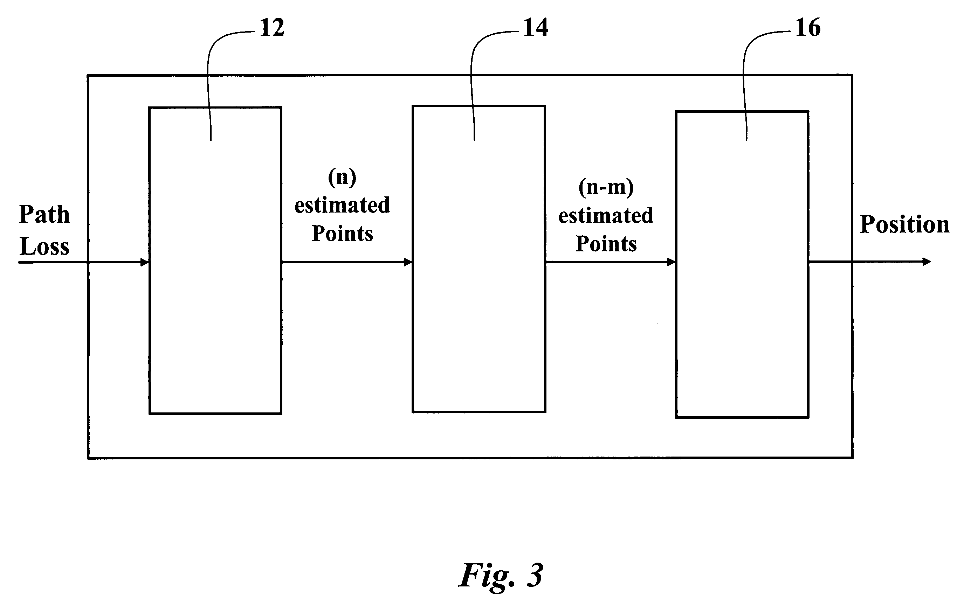

Figure 3 illustrates the basic information flow within the system 10. For the sake of simplicity, input information is illustrated here as consisting essentially of path loss information related to one given mobile terminal to be located. The input information in question is fed to a geo-location block 12. This block is configured to operate according to any known location technique. In a preferred embodiment, the block 12 is configured to operate according to the principles described in P. Wertz, G. Wöfle Hoppe, D. Zimmermmann, and F. Landstorfer: Enhanced Localization Technique within Urban and Indoor Environments based on Accurate and Fast Propagation Models. European Co-operation in the field of scientific and technical research, COST 273, Guildford UK, Jan. 2002.

The output from the block 12 is represented by a number n of points that are candidate to representing the actual position of the mobile terminal subject to location. The output from the block 12 is fed to a block 14 comprised of a M.V.A.J. filter (M.V.A.J. being an acronym for Map, Velocity, Acceleration and Jerk). The output from the M.V.A.J. filter 14 is a reduced set of (n - m) points candidate to representing the actual position of the mobile terminal subject to location.

The output from the M.V.A.J. filter 14 is fed to a block 16 comprised of a Kalman filter as described, e.g. in Zainab R. Zaidi and Brian L. Mark: Real-Time Mobility Tracking Algorithms for Cellular Networks Based on Kalman Filtering. IEEE Transactions on Mobile Computing, Vol. 4, No. 2, March/April 2005, pp. 195-208. The output from the Kalman filter 16 is a final point that represents the result of the location/tracking action, namely the point held to represent the actual position of the mobile terminal subject to location.

Within the processing chain just described, the block 14 (i.e. the M.V.A.J. filter) provides prediction on the next possible positions deleting the "impossible" ones, based on map (M), velocity (V), acceleration (A) and jerk (J) constraints.

In brief, in order to improve the quality of prediction, the arrangement described herein applies additional constraints - primarily in terms of electromagnetic field - to the process of locating a mobile terminal in a cellular network. This typically involves the operation of discarding some of the candidate points from which the position is determined (i.e. estimated). Preferably, these constraints are represented by movement constraints (i.e. velocity/speed, acceleration, jerk) and map constraints as well. In that way, the location procedure becomes an "intelligent" one that selects only those points that are possible (i.e. admissible) in view of the constraints in question. This approach renders location so precise as to make it suitable for use in certifying trajectories/paths followed by a mobile terminal. This is primarily due to the impossibility of assuming points/directions that are not compatible with the constraints set in terms of map, velocity, acceleration, and jerk.

In brief, the role of the M.V.A.J. filter 14 is to take the set of n candidate points provided by the geographic location (geo-location) block 12 and filter out of that set m points (m being generally lower than n) that - cannot - be representative of the location, thus leaving only (n - m) estimated points to be used for location purposes.

Essentially, the M.V.A.J. filter 14 is configured as a sort of rule engine, that applies a set of rules jointly dictated by map (M), velocity (i.e. speed - V), acceleration (A) and jerk (J) constraints, and discards those of the n input candidates received from the block 12 that are not compatible with those constraints.

As indicated in the foregoing, the M.V.A.J. filter 14 will discard (i.e. filter out) e.g. a candidate point jointly resulting to be moving at 70 km/h while indicated to be in a pedestrian area (or within a building).

Conversely, the M.V.A.J. filter 14 will accept (i.e. pass on to the Kalman filter 16) e.g. a candidate point resulting to be moving at 70 km/h while indicated to be located on a highway.

Constraints in terms of speed (velocity) and acceleration may be both in absolute terms (thus filtering out candidate points that appear to move too fast and/or too abruptly, beyond the capability of any land-based vehicle) and in relative terms. For instance, the filtering thresholds will be generally lower for those candidate points that map information indicates as being located in an urban environment.

Jerk constraints are preferably related to speed information. For instance, jerk data corresponding to an abrupt 90° turn will be "admitted" in the case of a mobile terminal moving slowly (e.g. units of Km/s, as when carried by a pedestrian) and "filtered out" in the case of a mobile terminal moving at a relatively high speed (e.g. tens of Km/s, as when carried by a user being transported by a means of conveyance such as a motor vehicle)

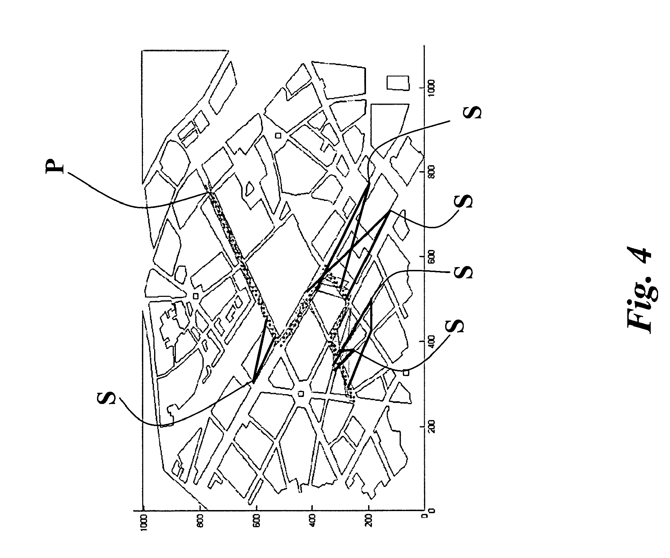

Figure 4 is an exemplary comparison of experimental tracking results obtained by means of the system described herein (including the M.V.A.J. filter 14) and tracking results obtained by resorting to traditional approaches. Specifically, reference P denotes a regular path obtained by collecting the location results of points subject to filtering as described herein.

Reference S conversely denotes the marked direction "jumps" (i.e. errors) currently exhibited by traditional solutions. These errors can be related e.g. to abrupt changes in the propagation conditions between the mobile terminal and the base station. These changes are quite likely to occur in urban environments e.g. when a mobile terminal turns into a street passing from non-LOS to LOS conditions or due to certain buildings acting under certain angles as mirrors for electromagnetic radiation.

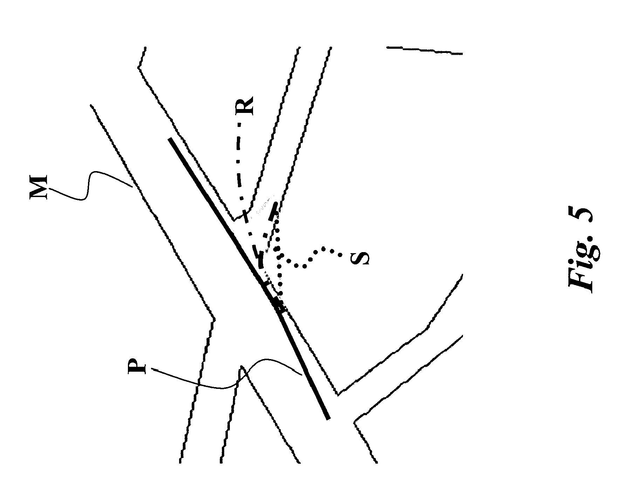

Figure 5 is further exemplary of map information and movement-based reasoning underlying operation of the system described herein. Specifically, in Figure 5 reference M is generally representative of information given by a map (buildings, streets, ...) that is used in conjunction with movement information (velocity, acceleration, jerk). In the figure, reference S is again representative of an "erroneous" path likely to be determined without information map: such an erroneous path does in fact pass through a building.

The chain line designated R is representative of the real path followed by the mobile terminal being tracked, including a "jerk" around the building corner followed by the mobile terminal returning to the original straight path. Finally, the continuous line P is again representative of the path computed by the system 10, by filtering out the jerk on the basis of map information.

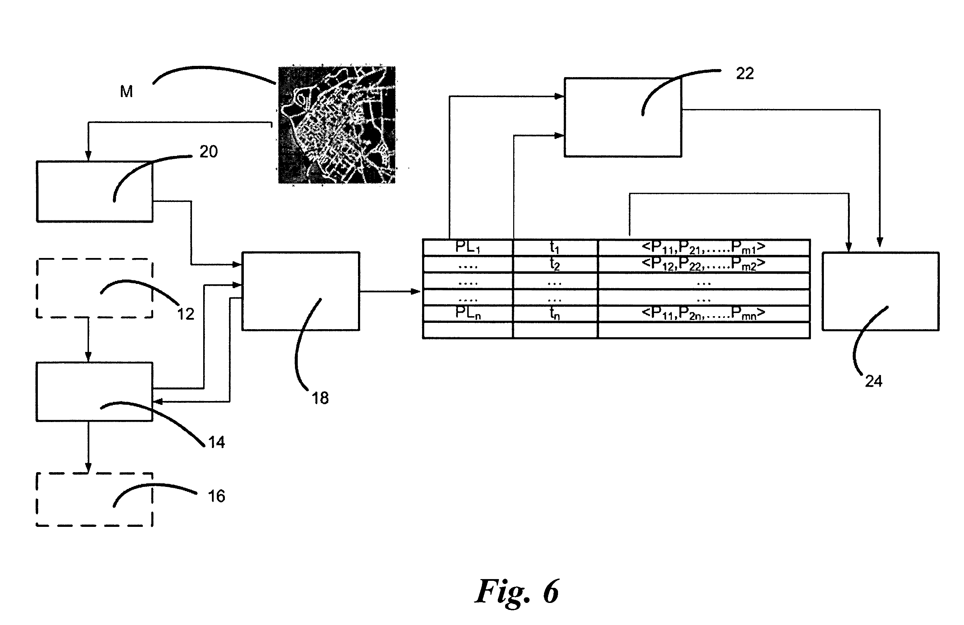

Figure 6 shows in more detail an exemplary operating architecture for the M.V.A.J. filter 14, also in connection with a possible black box test architecture. In the block diagram of figure 6, the M.V.A.J. filter 14 is illustrated as co-operating with an input/output block 18 that derives input map information M from a map information block 20 (e.g. in the form of a data base). The constraints given by the environment (e.g.: one way street, pedestrian area and so forth) are thus derived from the map information M for use by the M.V.A.J. filter 14.

During each location action, the input/output block 18 starts a transaction with the module (filter) 14 to calculate a test set. Typically such a test set is comprised of:

> $PL_a$ with $a \in 1..w$ that represents data on the real position of mobile phone at time a;
> $t_a$ with $a \in 1..w$ that represents a time step; and
> $P_{b,a}$ with $a \in 1..w$ and $b \in 1..n$ that represents a vector of n possible estimated positions at time a.

Note that for each vector $PL_a$ there exists at least one point not compatible with M.V.A.J. constraints by construction.

By way of direct comparison, the block diagram of Figure 6 also shows the possible behaviour of an unknown "competitor" system 22 receiving $PL_a$ and $t_a$ as inputs. The "competitor" generated outputs are collected and compared - via a tester block 24 - with the position vector ($P_{b,a}$) generated previously via the input/output generator module 18. If those outputs contain at least one point lying within a pre-set distance s from an "unreachable" point (i.e. a point which does not represent possible location due to M.V.A.J. constraints) one can assert that the system 22 operates differently from the arrangement described herein. If conversely, no point output from the system 22 is incompatibible with M.V.A.J. constraints, one can reasonably conclude that system 22 operates exactly as the arrangement described herein since M.V.A.J. constraints have been applied.

Stated otherwise, by providing a set of candidate points including at least one "impossible" point (i.e. a point incompatible with the constraints set by the M.V.A.J. filter) one may cross-check the behaviour of a competitor system. The competitor system discarding exactly the same point(s) provides good evidence to the effect that this system takes into account the same constraints in terms of map, velocity/speed, acceleration and jerk of and thus uses a filter such as the M.V.A.J. filter 14. While "at least one" impossible point adapted to be discarded has been referred to in the foregoing, it is self-evident that that a higher number of "impossibile" points being made available and being discarded provides increased reliability of the evidence that the same process is being implemented in the competitor system. Table T in figure 3 is generally representative of the result of comparison.

By way of further example, Table 1 below is comprised of an upper portion representative of operation of a system as schematically shown in figure 3 (i.e. including a M.V.A.J. filter/module 14) and a lower portion representative of operation of a conventional system including a Kalman filter only (i.e. - not - including the M.V.A.J. filter/module 14).

In both instances, the column labelled "Start" is representative of the coordinates (50, 68) of a starting point. The column labelled "Start Electromagnetic Field" contains the values of the electromagnetic fields (in dBs) as received by a mobile terminal from six neighbouring antennas at the starting point. The column labelled "Final Electromagnetic Field" contains the values of the electromagnetic fields (again in dBs) as received by the mobile terminal from six neighbouring antennas at the location point to be estimated. The output field values are identical in both cases.

The column labelled "Coord. Candidate" contains the candidate location points as received from the block 12. Those values that cannot be accepted by the filter 14 (in view of the M.V.A.J. constraints) are highlighted in boldface.

The column labelled M.V.A.J. indicates the values accepted by the filter 14, and the column labelled "Kalman Filter" indicates the final position estimated.

Table 1

| Start | Start Electromagnetic Field | Final Electromagnetic Field | Coord.Candidate | M.V.A.J. | Kalman FIlter |
|---|---|---|---|---|---|
| (50,68) | 70 22 38 12 25 45 | 68 23 38 15 29 41 | | | |
| | | | (50,72) (45,78) **(46,80)** **(42,75)** **(38,67)** (47,65) | (50,72) (45,78) (47,65) | (48,57) |

| Start | Start Electromagnetic Field | Final Electromagnetic Field | Coord.Candidate | Kalman FIlter |
|---|---|---|---|---|
| (50,68) | 70 22 38 12 25 45 | 68 23 38 15 29 41 | | |
| | | | (50,72) (45,78) (46,80) (42,75) (38,67) (47,65) | (46,83) |

It will be appreciated that in the case without the M.V.A.J. filter (lower portion of the table) a coordinate value is obtained (46,83) that is not compliant with the M.V.A.J. constraints. In fact, in the former case (upper portion of the table) the third candidate point (46,80) is discarded by the M.V.A.J. filter 14.

It will be further appreciated that Kalman filtering alone cannot enforce M.V.A.J. constraints.

The Kalman filter is a predictive filter that takes into account the error inherent in the path estimate provided by the system and is used to estimate the state of discrete process ruled by the following equations:

$$X_k = Ax_k - 1 + Bu_k + w_k - 1$$

where $X_k$ is the state to be estimated, A è is the state transition matrix that links the state at step k with the state at step k-1 in the absence of error. The vector u represents the forcing entity via B, and w is the random variable representative of process noise;

$$Z_k = Hx_k + v_k$$

links in turn the measurements Z to the state x via the matrix H.

Once these laws are determined, the solution of the Kalman filter is generated in two steps: a prediction step and a correction step. The prediction step uses the previous estimate (and this alone) and the law that regulates the state to determine the subsequent estimate and the covariance estimate P starting from the system covariance Q. The correction step uses the measurements Z according to the matrix H e measurement covariance R to correct the predictions and determine the new estimates.

For instance, if one considers a system characterised by a motion equation with a constant speed over a given stretch, the state of the system is determined at each instant by the position $x_c$, $y_c$ and by the speed $x_o$, $y_o$.

The Kalman filter equations are thus:

$$\underbrace{\begin{pmatrix} x_c(k) \\ y_c(k) \\ \dot{x}_o(k) \\ \dot{y}_o(k) \end{pmatrix}}_{\boldsymbol{x}(k)} = \underbrace{\begin{pmatrix} 1 & 0 & \Delta t & 0 \\ 0 & 1 & 0 & \Delta t \\ 0 & 0 & 1 & 0 \\ 0 & 0 & 0 & 1 \end{pmatrix}}_{A} \underbrace{\begin{pmatrix} x_c(k-1) \\ y_c(k-1) \\ \dot{x}_o(k-1) \\ \dot{y}_o(k-1) \end{pmatrix}}_{\boldsymbol{x}(k-1)} + \underbrace{\begin{pmatrix} \Delta t & 0 \\ 0 & \Delta t \\ 0 & 0 \\ 0 & 0 \end{pmatrix}}_{B} \underbrace{\begin{pmatrix} \dot{x}_t(k) \\ \dot{y}_t(k) \end{pmatrix}}_{\boldsymbol{u}(k)} + w_{k-1}$$

$$\underbrace{\begin{pmatrix} \hat{x}_c(k) \\ \hat{y}_c(k) \end{pmatrix}}_{Z} = \underbrace{\begin{pmatrix} 1 & 0 & 0 & 0 \\ 0 & 1 & 0 & 0 \end{pmatrix}}_{H} \begin{pmatrix} x_c(k) \\ y_c(k) \\ \dot{x}_o(k) \\ \dot{y}_o(k) \end{pmatrix} + v_k$$

The result obtained via the Kalman filter is thus a path that is statistically better.

In brief, the system 10 just described is able to locate a mobile phone, i.e. identifying the position therof by taking into accout both real and estimated path-loss in conjunction with all the information that can be extracted from e.g. a GIS map of the interested area. This represents a marked improvement over conventional arrangements that compute the mobile position only through real and estimated path-loss. Additionally, map information is overlapped with movement information as for example velocity, acceleration and jerk.

To sum up, the tracking system 10 described herein uses medium-level map information related e.g. to area classification (pedestrian area, high velocity area), so that validation of any candidate position depends on map and movement constraints. With this information, provided by a GIS map or estimated, the system described herein is able to obtain a notable improvement in location confidence. In addition, the system described herein is able to perform a sort of "reasoning" based on map information, by deducing e.g. for instance we can deduce that is impossible for a mobile antenna to move at 70 km/h in a pedestrian area while this is absolutely possible on a highway.

Those of skill in the art will promptly that the nature, type and number of constraints that may be applied by the block 14 (here designated M.V.A.J. filter) is in no way limited to the examples made herein. Specifically, these constraints lend themselves to being modified, even dynamically, to take into account different contexts over time. As a consequence the scope of the present inventions is in no way limited by any specific choice of those constraints.

The system 10 just described is able to provide a mobile phone tracking mechanism with verification. The system 10 provides an improved version of tracking not only on the basis of single point time-based location but relying on a set of estimated points for every period and timeforwarding algorithm that provides a first-level movement estimate. Additionally, the system 10 can provide multplexing i.e. cell dynamics management based on mobile antenna traffic. This feature relies on current cell traffic load to predict future loads.

Consequently, without prejudice to the underlying principles of the invention, the details and the embodiments may vary, even appreciably, with reference to what has been described by way of example only, without departing from the scope of the invention as defined by the annexed claims.

**Claims**

1. A method of locating mobile terminals in a communication network, the method including the steps of:

   - determining (12) a set of points candidate to representing the position of a mobile terminal being located;
   - selecting (16) out of said set of candidate points at least one point representative of the position of said mobile terminal being located,

   the method **characterised in that** it includes the steps of:

   - defining (18) geographical (M) and movement (V, A, J) constraints to be complied with by said mobile terminal being located;
   - filtering out (14) of said set of candidate points those points in said set that fail to comply with said geographical (M) and movement (V, A, J) constraints, thus generating a subset of points candidate to representing the position of said mobile terminal being located; and
   - performing said step of selecting (16) on said subset of points candidate to representing the position of said mobile terminal being located.

2. The method of claim 1, **characterised in that** it includes the step of defining (18) said geographical constraints as a function of map information (M) on the territory served by said mobile communication network as provided by a Geographic Information System (GIS) map.

3. The method of claim 1, **characterised in that** it includes the step of defining said geographical constraints by estimation.

4. The method of any of claims 1 to 3, **characterised in that** it includes the step of determining (12) said set of points candidate to representing the position of said mobile terminal being located by means of propagation models.

5. The method of any of claims 1 to 4, **characterised in that** it includes the step of determining (12) said set of points candidate to representing the position of said mobile terminal being located as a function of measured path losses between said mobile terminal and base stations in said mobile communication network.

6. The method of any of claims 1 to 5, **characterised in that** it includes the step of performing said step of selecting (16) on said subset of points candidate to representing the position of said mobile terminal by means of prevision-tracking.

7. The method of any of claims 1 to 6, **characterised in that** it includes the step of performing said step of selecting (16) on said subset of points candidate to representing the position of said mobile terminal by means of Kalman filtering.

8. The method of any of claims 1 to 7, **characterised in that** said geographical (M) constraints include area classification of the territory covered by said mobile communication network.

9. The method of any of claims 1 to 8, **characterised in that** said movement (V, A, J) constraints include constraints selected out of velocity, acceleration and jerk constraints.

10. The method of any of claims 1 to 9, **characterised in that** said movement (V, A, J) constraints are selected differently for different areas of the territory covered by said mobile communication network.

11. A system (10) for locating mobile terminals in a communication network, the system including:

    - a location module (12) for determining a set of points candidate to representing the position of a mobile terminal being located;
    - a selection module (16) for selecting out of said set of candidate points at least one point representative of the position of said mobile terminal being located,

the system **characterised in that** it includes:

- an input module (18) for defining geographical (M) and movement (V, A, J) constraints to be complied with by said mobile terminal being located;
- a filter (14) for filtering of said set of candidate points those points in said set that fail to comply with said geographical (M) and movement (V, A, J) constraints, thus generating a subset of points candidate to representing the position of said mobile terminal being located; and
- said selection module (16) connected to said filter (14) to perform said step of selecting (16) on said subset of points candidate to representing the position of said mobile terminal being located.

12. The system of claim 11, **characterised in that** it includes said input module (18) configured for defining said geographical constraints as a function of map information on the territory served by said mobile communication network as provided by a Geographic Information System (GIS) map.

13. The system of claim 11, **characterised in that** it includes said input module (18) configured for defining said geographical constraints by estimation.

14. The system of any of claims 11 to 13, **characterised in that** it includes said location module (12) configured for determining said set of points candidate to representing the position of said mobile terminal being located by means of propagation models.

15. The system of any of claims 11 to 14, **characterised in that** it includes said location module (12) configured for determining said set of points candidate to representing the position of said mobile terminal being located as a function of measured path losses between said mobile terminal and base stations in said mobile communication network.

16. The system of any of claims 11 to 15, **characterised in that** it includes a prevision-tracking module (16) as said selection module (16) for performing said step of selecting on said subset of points candidate to representing the position of said mobile terminal.

17. The system of any of claims 11 to 16, **characterised in that** it includes a Kalman filter (16) as said selection module (16) for performing said step of selecting on said subset of points candidate to representing the position of said mobile terminal.

18. The system of any of claims 11 to 17, **characterised in that** said geographical (M) constraints include area classification of the territory covered by said mobile communication network.

19. The system of any of claims 11 to 18, **characterised in that** said movement (V, A, J) constraints include constraints selected out of velocity, acceleration and jerk constraints.

20. The system of any of claims 11 to 19, **characterised in that** it includes said input module (18) configured for defining said movement (V, A, J) constraints differently for different areas of the territory covered by said mobile communication network.

21. A. mobile communication network equipped with the system of any of claims 11 to 20.

22. A computer program product, loadable in the memory of at least one computer and including software code portions for performing the method of any of claims 1 to 10.

*Fig. 1*

EP 1 765 031 A1

*Fig. 2*

*Fig. 3*

EP 1 765 031 A1

*Fig. 4*

*Fig. 5*

*Fig. 6*

**European Patent Office**

**EUROPEAN SEARCH REPORT**

Application Number

EP 05 42 5643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 56 496 A1 (SIEMENS AG) 7 July 2005 (2005-07-07) * paragraph [0008] - paragraph [0012] * * paragraph [0020] * * paragraph [0025] - paragraph [0026] * ----- | 1-22 | H04Q7/38 |
| X | GB 2 352 134 A (* AIRCOM INTERNATIONAL LIMITED) 17 January 2001 (2001-01-17) * page 2, line 26 - page 4, line 14 * * page 6, line 11 - page 7, line 25 * ----- | 1-22 | |
| X | WO 96/42179 A (PHONELINK PLC; BURKE, TREVOR) 27 December 1996 (1996-12-27) * page 4, line 1 - page 6, line 8 * * page 9, line 3 - page 11, line 2 * * page 12, line 5 - line 20 * ----- | 1-22 | |

TECHNICAL FIELDS SEARCHED (IPC)

H04Q

The present search report has been drawn up for all claims

| Place of search | Date of completion of the search | Examiner |
|---|---|---|
| Berlin | 9 March 2006 | Rothlübbers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 1 765 031 A1

## ANNEX TO THE EUROPEAN SEARCH REPORT
## ON EUROPEAN PATENT APPLICATION NO.

EP 05 42 5643

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2006

| Patent document cited in search report | | Publication date | Patent family member(s) | | Publication date |
|---|---|---|---|---|---|
| DE 10356496 | A1 | 07-07-2005 | NONE | | |
| GB 2352134 | A | 17-01-2001 | NONE | | |
| WO 9642179 | A | 27-12-1996 | AU 5826396 A | | 09-01-1997 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. DRANE.** Positioning GSM telephones. *IEEE Communications Magazine,* April 1998, vol. 36 (4), 46-59
- **JAMES J. CAFFERY, JR. ; GORDON L. STÜBER.** Overview of Radiolocation in CDMA Cellular Systems. *60th IEEE Communications Magazine,* April 1998
- **D. ZIMMERMMANN ; J. BAUMANN ; M. LAYH ; F. LANDSTORFER ; R. HOPPE ; G. WÖFLE.** Database Correlation for Positioning of Mobile Terminals in Cellular Networks using Wave Propagation Models. *60th IEEE Vehicular technology conference (VTC) 2004 -Fall,* October 2004
- **R. HOPPE ; G. WÖFLE ; F. LANDSTORFER.** Fast 3-D Ray Tracing for the Planning of Microcells by Intelligent Preprocessing of the Data Base. *3rd European Personal and Mobile Communication Conference (EPMCC) 1999,* March 1999

- **P. WERTZ ; G. WÖFLE HOPPE ; D. ZIMMERMMANN ; F. LANDSTORFER.** Enhanced Localization Technique within Urban and Indoor Environments based on Accurate and Fast Propagation Models. *European Co-operation in the field of scientific and technical research, COST 273,* January 2002
- **ZAINAB R. ZAIDI ; BRIAN L. MARK.** Real-Time Mobility Tracking Algorithms for Cellular Networks Based on Kalman Filtering. *IEEE Transactions on Mobile Computing,* March 2005, vol. 4 (2), 195-208